(19) **Europäisches Patentamt**

**European Patent Office**

**Office européen des brevets**

(11) **EP 1 001 910 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.⁷: **C01B 21/26**

(21) Anmeldenummer: **98946323.7**

(86) Internationale Anmeldenummer:
**PCT/EP1998/005126**

(22) Anmeldetag: **11.08.1998**

(87) Internationale Veröffentlichungsnummer:
**WO 1999/007638 (18.02.1999 Gazette 1999/07)**

(54) **VERFAHREN ZUR HERSTELLUNG VON SALPETERSÄURE UND VORRICHTUNG ZUR DURCHFÜHRUNG DES VERFAHRENS**

METHOD FOR PRODUCING NITRIC ACID AND DEVICE FOR CARRYING OUT SAID METHOD

PROCEDE DE FABRICATION D'ACIDE NITRIQUE ET DISPOSITIF POUR LA MISE EN OEUVRE DE CE PROCEDE

(84) Benannte Vertragsstaaten:
**AT BE DE DK ES FI FR GB IT NL SE**

(30) Priorität: **12.08.1997 DE 19734757**
**10.02.1998 DE 19805202**

(43) Veröffentlichungstag der Anmeldung:
**24.05.2000 Patentblatt 2000/21**

(73) Patentinhaber: **BASF Aktiengesellschaft**
**67056 Ludwigshafen (DE)**

(72) Erfinder:
 • **KLEIN, Marton**
 **D-51645 Gummersbach (DE)**
 • **KUBISA, Ryszard**
 **D-51645 Gummersbach (DE)**

(56) Entgegenhaltungen:
**EP-A- 0 275 681** **DE-B- 2 856 589**
**US-A- 4 812 300** **US-A- 5 478 549**

 • **CHEMICAL ABSTRACTS, vol. 110, no. 14, 3. April 1989 Columbus, Ohio, US; abstract no. 117728, Seite 175; XP000056164 & CS 249 211 A (COLLAK)**

**Beschreibung**

Die Erfindung betrifft ein Verfahren zur Herstellung von Salpetersäure, bei dem Ammoniak an mindestens einem Katalysatornetz, insbesondere Platinnetz, unter Zufuhr von Sauerstoff verbrannt wird und die Reaktionsgase gekühlt werden.

Aus der US-A-5,478,549 ist die Herstellung von NO durch katalytische Oxidation von Ammoniak an einem Katalysator bestehend aus einem Pt-Netz und einem $ZrO_2$-Katalysator, der zur Erniedrigung des $N_2O$-Gehaltes führt, bekannt.

Aus der US-A-4,812,300 ist dieselbe Umsetzung jedoch an einem Katalysatorsystem (Pt/oxidisches Perowskit) bekannt.

Aus der EP-A-359 286 ist die Anwendung eines ammoniakumsetzenden Katalysators zusammen mit einem $N_2O$-zersetzenden Katalysator bei einer Retentionszeit von 0,1 bis 3 sec., bekannt.

Die Verbrennung von $NH_3$ an einem Katalysatornetz erfolgt bei Temperaturen von z.B. 800 bis 1000°C gemäß der nachfolgenden Gleichung:

$$4\,NH_3 + 5\,O_2 \quad \Rightarrow 4\,NO + 6\,H_2O \qquad (1)$$

Das hierbei entstehende $NO_2$ reagiert während und nach der Abkühlung der Reaktionsgase auf ca. 20 bis 30°C mit Sauerstoff zu $NO_2$:

$$NO + \tfrac{1}{2}\,O_2 \quad \Rightarrow NO_2 \qquad (2)$$

Bei Kontakt mit Wasser und Sauerstoff entsteht die gewünschte Salpetersäure $HNO_3$:

$$4\,NO_2 + 2\,H_2O + O_2 \quad \Rightarrow 4\,HNO_3 \qquad (3)$$

Es wurde gefunden, daß als Nebenreaktion bei der katalytischen $NH_3$-Verbrennung zu NO nach Gleichung (1) auch unerwünschtes $N_2O$ (Lachgas) entsteht:

$$4\,NH_3 + 4\,O_2 \quad \Rightarrow 2\,N_2O + 6\,H_2O \qquad (4)\,,$$

welches in den nachfolgenden Stufen der Salpetersäureherstellung nicht abgebaut wird.

Es ist daher die Aufgabe der vorliegenden Erfindung, ein Verfahren anzugeben, bei dem bei der Erzeugung von Salpetersäure eine Freisetzung von Lachgas weitgehendst vermieden wird.

Diese Aufgabe wird dadurch gelöst, daß die Reaktionsgase stromab des Katalysatornetzes vor der Kühlung über einen temperaturstabilen Katalysator für die Umwandlung des in den Reaktionsgasen enthaltenen $N_2O$ geführt werden.

Die Umwandlung kann je nach gewähltem Katalysator durch Zersetzung in die Elemente Stickstoff und Sauerstoff:

$$2N_2O \quad \Rightarrow 2N_2 + O_2 \qquad (5)$$

oder durch Oxidation:

$$2N_2O + 3O_2 \quad \Rightarrow 4NO_2 \qquad (6)$$

oder

$$N_2O + \tfrac{1}{2}\,O_2 \quad \Rightarrow 2NO \qquad (7)$$

erfolgen.

Die Umwandlung durch Oxidation des $N_2O$ zu NO oder $NO_2$ führt zu einer Umsatzsteigerung der Salpetersäureproduktion und wird daher bevorzugt.

Lachgas gehört zwar zu den sogenannten endothermen Verbindungen und sollte daher schon bei Raumtemperatur in die Elemente zerfallen, jedoch erfolgt die Zersetzung aber aus kinetischen Gründen erst bei Erwärmung. Die erfindungsgemäße Verfahrensführung nutzt in vorteilhafter Weise die Wärme der Reaktionsgase unmittelbar nach der $NH_3$-Verbrennung. Eine separate Erwärmung der Reaktionsgase für die $N_2O$-Umwandlung ist nicht erforderlich. Es wird vorzugsweise ein hochaktiver Katalysator eingesetzt, da die Verweilzeit der Reaktionsgase nach Austritt aus dem Katalysatornetz bis Eintritt in die Wärmetauscher kurz ist, damit eine thermische Zersetzung des sich gemäß Gleichung (1) bildenden NO in seine Elemente nicht begünstigt wird.

Weiterhin ist dafür Sorge zu tragen, daß der Katalysator zur $N_2O$-Umwandlung die gleichzeitig mögliche Reaktion einer NO-Zersetzung nicht bzw. nicht nennenswert beschleunigt.

Es ist bekannt, zur gleichmäßigen Beaufschlagung des der Abkühlung der Reaktionsgase dienenden Wärmetauschers bzw. Heizflächen die Reaktionsgase dem Katalysatornetz über eine Einrichtung zur Strömungsgleichverteilung zu führen, z.B. über eine Schüttung von Raschig-Ringen. Bei der erfindungsgemäßen Verfahrensführung kann der $N_2O$-Umwandlungskatalysator auch in Form von Raschig-Ringen oder dergleichen ausgebildet werden, um neben der $N_2O$-Umwandlung zugleich eine Strömungsvergleichmäßigung zu gewährleisten.

Auch ist es bekannt, das Platinnetz zu seiner Abstützung auf keramischen Elementen aufliegen zu lassen. Es liegt im Rahmen der bevorzugten Erfindungsführung, auch solche Abstützelemente aus einem katalytisch aktiven Material für die $N_2O$-Umwandlung aufzubauen.

Es ist also zweckmäßig, daß die Reaktionsgase durch eine Schüttung von Katalysatorelementen oder über einen gasdurchlässigen Formkatalysator, wie z.B. Wabenkatalysator, geführt werden.

Der Katalysator ist ausgebildet aus einem Metall ausgewählt aus der Gruppe V, Cr, Fe, Ni, Co, Cu, Bi, Zn, Al, Mg und/oder mit deren Oxiden dotierte Keramik. In besonders bevorzugter Weise werden Tonkeramiken, d.h. Keramiken auf Aluminiumsilikat-Basis eingesetzt, weiter bevorzugt Cordierite.

Weiterhin ist es denkbar, als Katalysator Spinelle und/oder Perowskite einzusetzen.

Bei allen eingesetzten Katalysatoren muß dafür Sorge getragen werden, daß sie der Wärmebelastung im Bereich von 800 bis 1000°C unmittelbar nach Austritt der Reaktionsgase aus dem Katalysatornetz standhalten können.

Es kann entweder das reine Katalysatormaterial eingesetzt werden oder Katalysatormaterial wird auf einen ebenfalls temperaturstabilen Träger aufgebracht.

Es kann entweder das reine Katalysatormaterial eingesetzt werden oder Katalysatormaterial wird auf einen ebenfalls temperaturstabilen Träger aufgebracht.

Die Erfindung richtet sich auch auf eine Vorrichtung zur Herstellung von Salpetersäure mit einem Reaktor, mindestens einem sich quer zum Reaktorinneren erstreckenden Katalysatornetz und mindestens einer dem Katalysatornetz nachgeschalteten Kühlfläche.

Erfindungsgemäß ist dabei vorgesehen, daß zwischen dem Katalysatornetz und der Kühlfläche ein gasdurchlässiger temperaturstabiler Katalysator für die Umwandlung von in den Reaktionsgasen enthaltenem $N_2O$ angeordnet ist.

Dabei ist es zweckmäßig, wenn der Katalysator gleichzeitig der Strömungsgleichverteilung dient bzw. das Katalysatornetz für die $NH_3$-Verbrennung abstützt.

Eine erfindungsgemäße Vorrichtung soll nun anhand der beigefügten Figuren näher erläutert werden.

In den Reaktor 1 wird über eine Zuleitung 2 eine Mischung aus $NH_3$ und sauerstoffhaltiger Luft $O_2$ eingeleitet. Die Zuleitung 2 mit relativ geringem Querschnitt geht in eine Haube 3 größeren Querschnittes über, an die sich ein zylindrischer Behältergrundkörper 4 anschließt. Quer über die Eintrittsöffnung des Grundkörpers 4 erstrecken sich Platinnetze 5, die gegebenenfalls noch abgestützt sind. Unmittelbar nach den Platinnetzen ist ein Katalysatoreinbau 6 für die $N_2O$-Umwandlung angeordnet, der aus einer Schüttung von katalytisch aktiven Raschig-Ringen 6a und einem die Schüttung tragenden Lochblech 6b besteht. Die aus dem Katalysatoreinbau 6 austretenden Reaktionsgase R treten in einen nur schematisch dargestellten Kühlflächeneinbau 7 ein, der von einem Kühlmittel K durchströmt wird. Die Reaktionsgase werden über einen Auslaß 8 abgezogen.

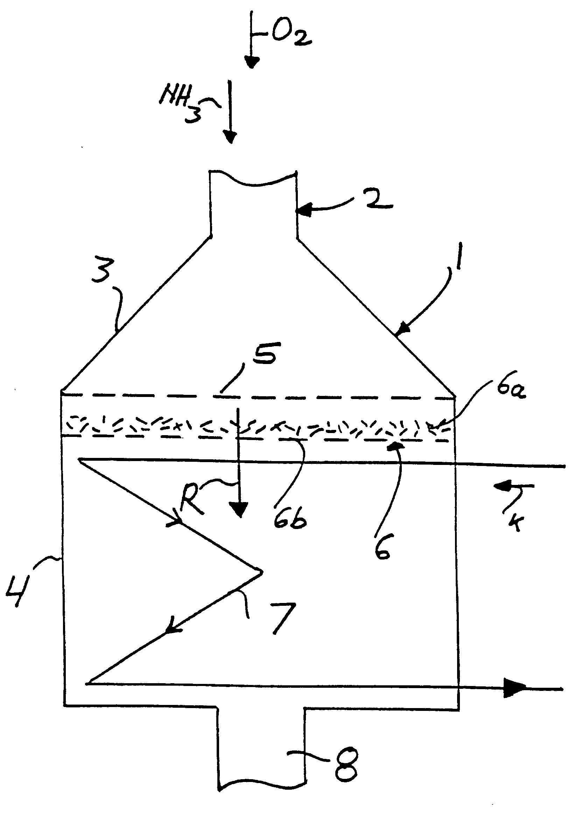

## Patentansprüche

1. Verfahren zur Herstellung von Salpetersäure, bei dem Ammoniak an mindestens einem Katalysatornetz, insbesondere Platinnetz, unter Zufuhr von Sauerstoff verbrannt wird und die Reaktionsgase zur selektiven Zersetzung von $N_2O$ mit einem Metall- oder Metalloxidkatalysator in Kontakt gebracht werden, **dadurch gekennzeichnet, daß** die Reaktionsgase stromab des Katalysatornetzes unmittelbar nach Katalysatornetz vor der Kühlung über einen temperaturstabilen Katalysator für die Umwandlung des in den Reaktionsgasen enthaltenen $N_2O$ geführt werden, der als eine mit Metallen ausgewählt aus der Gruppe: V, Cr, Fe, Ni, Co, Cu, Bi, Zn, Al, Mg und/oder mit deren Oxiden dotierte Keramik ausgebildet ist.

2. Verfahren nach Anspruch 1, **dadurch gekennzeichnet, daß** die Reaktionsgase über eine Schüttung von Katalysatorelementen geführt werden.

3. Verfahren nach Anspruch 1 oder 2, **dadurch gekennzeichnet, daß** die Reaktionsgase über einen gasdurchlässigen Formkatalysator, wie z.B. Wabenkatalysator, geführt werden.

4. Verfahren nach mindestens einem der Ansprüche 1 bis 3, **dadurch gekennzeichnet, daß** als Katalysator Tonkeramiken eingesetzt werden.

5. Verfahren nach mindestens einem der Ansprüche 1 bis 4, **dadurch gekennzeichnet, daß** bei Temperaturen von 800 bis 1000°C temperaturstabile Katalysatoren eingesetzt werden.

6. Vorrichtung zur Herstellung von Salpetersäure mit einem Reaktor, mindestens einem sich quer zum Reaktorinneren erstreckenden Katalysatornetz, mindestens einer dem Katalysatornetz nachgeschalteten Kühlfläche und einem von den Reaktionsgasen durchströmbaren Katalysator aus Metalloder Metalloxid, **dadurch gekennzeichnet, daß** zwischen dem Katalysatornetz (5) und der Kühlfläche (7) unmittelbar nach dem Katalysatornetz ein gasdurchlässiger temperaturstabiler Katalysator (6; 6a, 6b) für die Umwandlung von in den Reaktionsgasen enthaltenem $N_2O$ angeordnet ist, der als eine mit Metallen ausgewählt aus der Gruppe, V, Cr, Fe, Ni, Co,Cu, Bi, Zn, Al, Mg und/oder mit derem Oxiden dotierte Keramik ausgebildet ist.

7. Vorrichtung nach Anspruch 6, **dadurch gekennzeichnet, daß** der Katalysator gleichzeitig der Strömungsgleichverteilung dient.

8. Vorrichtung nach Anspruch 6 oder 7, **dadurch gekennzeichnet, daß** der Katalysator gleichzeitig das Katalysatornetz für die NH$_3$-Verbrennung abstützt.

## Claims

1. A process for preparing nitric acid by burning ammonia over at least one catalyst gauze, in particular a platinum gauze, with introduction of oxygen and contacting the reaction gases with a metal or metal oxide catalyst to selectively decompose N$_2$O, which comprises passing the reaction gases immediately downstream of the catalyst gauze, prior to cooling, over a thermally stable catalyst for converting the N$_2$O contained in the reaction gases, said catalyst being formed as a ceramic structure doped with metals selected from the group consisting of V, Cr, Fe, Ni, Co, Cu, Bi, Zn, Al, Mg and/or with oxides thereof.

2. A process as claimed in claim 1, wherein the reaction gases are passed over a bed of catalyst elements.

3. A process as claimed in claim 1 or 2, wherein the reaction gases are passed over a gas-permeable shaped catalyst, e.g. a honeycomb catalyst.

4. A process as claimed in at least one of claims 1 to 3, wherein clay ceramics are used as catalyst.

5. A process as claimed in any of claims 1 to 4, wherein catalysts which are thermally stable at from 800 to 1000°C are used.

6. An apparatus for preparing nitric acid, which comprises a reactor, at least one catalyst gauze extends transverse to the interior of the reactor, at least one cooling surface downstream of the catalyst gauze and a metal or metal oxide catalyst through which the reaction gases can flow, wherein a gas-permeable thermally stable catalyst (6; 6a, 6b) for converting the N$_2$O contained in the reaction gases is located between the catalyst gauze (5) and the heating surface (7) and immediately downstream of the catalyst gauze, said catalyst being formed as a ceramic structure doped with metals selected from the group consisting of V, Cr, Fe, Ni, Co, Cu, Bi, Zn, Al, Mg and/or with oxides thereof.

7. An apparatus as claimed in claim 6, wherein the catalyst simultaneously serves to distribute the flow uniformly.

8. An apparatus as claimed in claim 6 or 7, wherein the catalyst simultaneously supports the catalyst gauze for NH$_3$ combustion.

## Revendications

1. Procédé de préparation de l'acide nitrique, dans lequel de l'ammoniac est brûlé sur au moins une grille de catalyseur, en particulier une grille de platine, avec introduction d'oxygène et les gaz de réaction pour la décomposition sélective de N$_2$O sont amenés en contact avec un catalyseur métallique ou à oxyde métallique, **caractérisé en ce que** les gaz de réaction en aval de la grille de catalyseur sont conduits directement après la grille de catalyseur avant le refroidissement, sur un catalyseur stable en température pour la conversion du N$_2$O contenu dans les gaz de réaction, lequel catalyseur est formé en tant que céramique dopée avec des métaux choisis dans le groupe formé par V, Cr, Fe, Ni, Co, Cu, Bi, Zn, Al, Mg, et/ou avec leurs oxydes.

2. Procédé selon la revendication 1, **caractérisé en ce que** les gaz de réaction sont conduits sur un déversement d'éléments de catalyseur.

3. Procédé selon la revendication 1 ou 2, **caractérisé en ce que** les gaz de réaction sont conduits sur un catalyseur façonné, perméable au gaz, comme par exemple un catalyseur en nid d'abeille.

4. Procédé selon au moins l'une quelconque des revendications 1 à 3, **caractérisé en ce que** des céramiques d'argile sont mises en oeuvre en tant que catalyseurs.

5. Procédé selon au moins l'une quelconque des revendications 1 à 4, **caractérisé en ce que** des catalyseurs stables en température sont mis en oeuvre à des températures de 800 à 1 000°C.

6. Dispositif de préparation d'acide nitrique ayant un réacteur, au moins une grille de catalyseur s'étendant transversalement par rapport à l'intérieur du réacteur, au moins une surface de refroidissement placée en aval de la grille de catalyseur et un catalyseur pouvant être traversé par le gaz de réaction, constitué de métal ou d'oxyde métallique, **caractérisé en ce qu'**un catalyseur (6; 6a, 6b) stable en température, perméable aux gaz, est disposé entre la grille de catalyseur (5) et la surface chauffante (7), directement après la grille de catalyseur, pour la conversion du N$_2$O contenu dans les gaz de réaction, lequel catalyseur est formé en tant que céramique dopée avec des métaux choisis dans le groupe formé par V, Cr, Fe, Ni, Co, Cu, Bi, Zn, Al, Mg, et/ou avec leurs oxydes.

7. Dispositif selon la revendication 6, **caractérisé en ce que** le catalyseur sert en même temps à répartir uniformément l'écoulement.

**8.** Dispositif selon la revendication 6 ou 7, **caractérisé en ce que** le catalyseur soutient en même temps la grille de catalyseur pour la combustion de $NH_3$.